# EUROPÄISCHE PATENTANMELDUNG

(11) **EP 4 527 529 A1**
(43) Veröffentlichungstag der Anmeldung: **26.03.2025**
(21) Anmeldenummer: 24198500.1
(22) Anmeldetag: 04.09.2024
(51) Int. Cl.: B23C 5/10

(54) **WERKZEUG ZUR SPANABHEBENDEN BEARBEITUNG EINES WERKSTÜCKS**

(30) Priorität: 14.09.2023 DE 102023124920
(71) Anmelder: MAPAL Fabrik für Präzisionswerkzeuge Dr. Kress KG, 73431 Aalen (DE)
(72) Erfinder: PECAT, Oliver, 73434 Aalen (DE); HERRLING, Andreas, 73469 Utzmemmingen (DE)
(74) Vertreter: Kordel, Mattias

(57) **Zusammenfassung**

Die Erfindung betrifft ein Werkzeug (1) zur spanabhebenden Bearbeitung eines Werkstücks, aufweisend:
- einen Werkzeugschaft (3) mit einer Mittelachse, die von einer Umfangsrichtung umgriffen ist, und einem Wirk-Ende (5),
- mindestens einen sich bereichsweise entlang der Umfangsrichtung und entlang der Mittelachse erstreckenden ersten Werkzeugschaftsektor (7.1), der eine Mehrzahl von ersten Schneiden (9.1) aufweist, die entlang der Mittelachse voneinander beabstandet angeordnet sind und bereichsweise die Mittelachse schraubenlinienförmig umgreifen, wobei die ersten Schneiden (9.1) eine erste Steigung aufweisen,
- mindestens einen sich bereichsweise entlang der Umfangsrichtung und entlang der Mittelachse erstreckenden zweiten Werkzeugschaftsektor (7.2), der eine Mehrzahl von zweiten Schneiden (9.2) aufweist, die entlang der Mittelachse voneinander beabstandet angeordnet sind und bereichsweise die Mittelachse schraubenlinienförmig umgreifen, wobei die zweiten Schneiden (9.2) eine von der ersten Steigung verschiedene zweite Steigung aufweisen,
- mindestens einen sich bereichsweise entlang der Umfangsrichtung und entlang der Mittelachse erstreckenden dritten Werkzeugschaftsektor (7.3), in dem sich die ersten Schneiden (9.1) und die zweiten Schneiden (9.2) derart kreuzen, dass
- eine Mehrzahl voneinander beabstandeter Schneidelemente (11) gebildet ist, die einen ersten Schneidenabschnitt (17.1) der sich kreuzenden ersten Schneide (9.1) und einen zweiten Schneidenabschnitt (17.2) der sich kreuzenden zweiten Schneide (9.2) aufweisen, wobei
- nur der mindestens eine dritte Werkzeugschaftsektor (7.3) die Schneidelemente (11) aufweist.

## Beschreibung

Die Erfindung betrifft ein Werkzeug, insbesondere Fräswerkzeug, zur spanabhebenden Bearbeitung eines Werkstücks, wobei das Werkstück insbesondere einen Faserverbundwerkstoff aufweist oder aus einem Faserverbundwerkstoff gebildet ist.

Faserverbundwerkstoffe weisen eine relativ hohe mechanische Stabilität bei - im Vergleich zu Stahl - einer relativ geringen Dichte auf. Faserverbundwerkstoffe sind somit relativ gut für den Leichtbau geeignet. Bei der mechanischen Bearbeitung, insbesondere beim Fräsen und Bohren, kommt es während der Bearbeitung einer Werkstückoberfläche jedoch zu Ausfransungen, da nicht alle Fasern sauber abgetrennt werden. Die nicht sauber abgetrennten Fasern - auch als Faserüberstände bezeichnet - sind einer qualitativ hochwertigen Oberfläche abträglich. Ferner kann es bei Anlageflächen, wenn beispielsweise ein Bauteil aus einem Faserverbundwerkstoff in einer Baugruppe montiert wird, zu Montageungenauigkeiten kommen, da die Faserüberstände ein präzises Montieren an den Anlageflächen des Bauteils erschweren. Es ist bekannt, mittels eines Kompressionsschnitts eine bessere Werkstückoberfläche herzustellen, da - im Vergleich zu einem Verfahren ohne Kompressionsschnitt - ein größerer Teil der Fasern sauber abgetrennt werden kann. Ein solcher Kompressionsfräser für einen Kompressionsschnitt ist aus US 9,849,522 B2 bekannt. Der Kompressionsfräser weist in Umfangsrichtung abwechselnd geneigte Schneiden mit zugeordneten Schneidenspannuten auf. Dazwischen sind - in Umfangsrichtung gesehen - zusätzliche, im Vergleich zu den Schneidenspannuten relativ große Hauptspannuten angeordnet. Mittels des Kompressionsfräsers werden die Fasern nicht nur mit einer Schneidkraft beaufschlagt, die in Drehrichtung des Werkzeugs orientiert ist, sondern es wird zusätzlich eine Schneidkraft parallel zu einer Mittelachse des Fräsers erzeugt, die aufgrund der abwechselnd geneigten Schneiden abwechselnd in Richtung eines Wirk-Endes des Kompressionsfräsers oder in Richtung eines Einspann-Endes des Kompressionsfräsers zeigt. Ein solcher Fräser neigt jedoch aufgrund dieser abwechselnden Kräfte zu Vibrationen. Ferner können auch mit einem solchen Kompressionsfräser nicht alle Fasern sauber abgetrennt werden. Auch kann es bei einer großen Schnitttiefe zu einem Zusetzen der relativ kleinen Schneidenspannuten mit zerspantem Werkstückmaterial kommen. Zur Standzeiterhöhung wäre es außerdem wünschenswert, solche Fräser mit einem Diamantwerkstoff, insbesondere einem CVD-Diamantwerkstoff, zu beschichten. Die Vibrationen führen jedoch zu einem relativ hohen Verschleiß der Beschichtung, bis hin zum Abplatzen derselben.

Der Erfindung liegt daher die Aufgabe zugrunde, ein Werkzeug, insbesondere Fräswerkzeug, zur spanabhebenden Bearbeitung eines Werkstücks, wobei das Werkstück insbesondere einen Faserverbundwerkstoff aufweist oder aus einem Faserverbundwerkstoff gebildet ist, zu schaffen, wobei die genannten Nachteile reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere gelöst, indem ein Werkzeug, insbesondere Fräswerkzeug, zur spanabhebenden Bearbeitung eines Werkstücks, wobei das Werkstück insbesondere einen Faserverbundwerkstoff aufweist oder aus einem Faserverbundwerkstoff gebildet ist, geschaffen wird. Das Werkzeug weist einen Werkzeugschaft mit einer Mittelachse und ein Wirk-Ende auf. Die Mittelachse ist von einer Umfangsrichtung umgriffen. Das Werkzeug weist ferner mindestens einen sich bereichsweise entlang der Umfangsrichtung und entlang der Mittelachse erstreckenden ersten Werkzeugschaftsektor auf. Der mindestens eine erste Werkzeugschaftsektor weist eine Mehrzahl von ersten Schneiden auf, die, insbesondere ausgehend von dem Wirk-Ende, entlang der Mittelachse voneinander beabstandet angeordnet sind und bereichsweise die Mittelachse schraubenlinienförmig umgreifen. Die ersten Schneiden weisen eine erste Steigung auf. Das Werkzeug weist ferner mindestens einen sich bereichsweise entlang der Umfangsrichtung und entlang der Mittelachse erstreckenden zweiten Werkzeugschaftsektor auf. Der mindestens eine zweite Werkzeugschaftsektor weist eine Mehrzahl von zweiten Schneiden auf, die, insbesondere ausgehend von dem Wirk-Ende, entlang der Mittelachse voneinander beabstandet angeordnet sind und bereichsweise die Mittelachse schraubenlinienförmig umgreifen. Die zweiten Schneiden weisen eine von der ersten Steigung verschiedene zweite Steigung auf. Das Werkzeug weist ferner mindestens einen sich bereichsweise entlang der Umfangsrichtung und entlang der Mittelachse erstreckenden dritten Werkzeugschaftsektor auf. In dem dritten Werkzeugschaftsektor kreuzen sich die ersten Schneiden und die zweiten Schneiden derart, dass, insbesondere in demselben dritten Werkzeugschaftsektor, eine Mehrzahl voneinander beabstandeter Schneidelemente gebildet ist. Die Schneidelemente weisen, insbesondere jeweils, einen ersten Schneidenabschnitt der sich kreuzenden ersten Schneide und einen zweiten Schneidenabschnitt der sich kreuzenden zweiten Schneide auf. Nur, insbesondere ausschließlich, der mindestens eine dritte Werkzeugschaftsektor weist die Schneidelemente auf. Insbesondere ist der erste Werkzeugschaftsektor frei von den Schneidelementen, weist also insbesondere keine Schneidelemente auf. Insbesondere ist der zweite Werkzeugschaftsektor frei von den Schneidelementen, weist also insbesondere keine Schneidelemente auf.

Mittels der besonderen Anordnung der ersten Schneiden, der zweiten Schneiden und der Schneidelemente werden vorteilhaft Vibrationen während der spanenden Bearbeitung reduziert, vorzugsweise vermieden. Die Schneidelemente ermöglichen einen relativ weichen Übergang zwischen den ersten Schneiden und den zweiten Schneiden, da im Bereich der Schneidelemente die ersten Schneidenabschnitte der ersten Schneiden und die zweiten Schneidenabschnitte der zweiten Schneiden gleichzeitig in Eingriff sind. Aufgrund der reduzierten Vibrationen ist der Verschleiß einer Beschichtung mit einem Diamantwerkstoff, insbesondere einem CVD-Diamantwerkstoff, reduziert. Die Schneidelemente führen insbesondere zu einer besseren Abtrennung der Fasern, sodass eine bessere Werkstückoberfläche erhalten wird.

Unter einem Faserverbundwerkstoff wird im Kontext der vorliegenden technischen Lehre insbesondere ein Verbundwerkstoff verstanden, der eine Matrix aufweist, in die Fasern eingebettet sind. Insbesondere ist die Matrix ein Füll- und Klebstoff zwischen den Fasern.

Unter Fräsen wird hier insbesondere ein spanabhebendes Bearbeitungsverfahren mit rotierendem Werkzeug verstanden. Die Schneiden des Fräswerkzeugs erzeugen dabei die Schnittbewegung durch ihre Drehung um die Mittelachse des Fräswerkzeugs als Rotationsachse. Zugleich wird eine Vorschubbewegung - insbesondere senkrecht zur Mittelachse - zwischen dem Fräswerkzeug und einem bearbeiteten Werkstück bewirkt. Dabei kann die Vorschubbewegung am Fräswerkzeug und/oder am Werkstück ausgeführt werden.

Als spanabhebend wird im Kontext der vorliegenden technische Lehre insbesondere eine mechanische Abtrennung von Werkstückteilen des Werkstücks verstanden. Als Werkstückteile kommen insbesondere Späne, Faserabschnitte der Fasern des Faserverbundwerkstoffs und Partikel der Matrix des Faserverbundwerkstoffs in Betracht.

Unter einem Werkzeugschaftsektor, ausgewählt aus dem ersten Werkzeugschaftsektor, dem zweiten Werkzeugschaftsektor und dem dritten Werkzeugschaftsektor, wird im Kontext der vorliegenden technischen Lehre insbesondere ein Werkzeugschaftvolumen verstanden, das gebildet, insbesondere begrenzt ist, indem ein Kreissektor entlang der Mittelachse gedanklich bis auf eine Extrusionslänge extrudiert ist. Der Kreissektor liegt insbesondere in einer senkrecht auf der Mittelachse stehenden Ebene des Werkzeugs. Insbesondere ist die Extrusionslänge frei wählbar. Somit ist die Höhe eines Werkzeugschaftsektors, ausgewählt aus dem ersten Werkzeugschaftsektor, dem zweiten Werkzeugschaftsektor und dem dritten Werkzeugschaftsektor, entlang der Mittelachse ebenfalls frei wählbar. Insbesondere erstreckt sich ein Werkzeugschaftsektor, ausgewählt aus dem ersten Werkzeugschaftsektor, dem zweiten Werkzeugschaftsektor und dem dritten Werkzeugschaftsektor, entlang eines Mittelachsenabschnitts der Mittelachse. In einer Ausführungsform erstreckt sich der mindestens eine Werkzeugschaftsektor ausgehend von dem Wirk-Ende entlang der Mittelachse in Richtung auf ein Schaftende, insbesondere ein Einspann-Ende, des Werkzeugs. In einer anderen Ausführungsform erstreckt sich der mindestens eine Werkzeugschaftsektor ausgehend von einer von dem Wirk-Ende in Richtung des Schaftendes, insbesondere des Einspann-Endes, beabstandeten Ebene entlang der Mittelachse in Richtung des Schaftendes, insbesondere des Einspann-Endes.

In einer Ausführungsform ist ein Werkzeugschaftsektor, ausgewählt aus dem ersten Werkzeugschaftsektor, dem zweiten Werkzeugschaftsektor und dem dritten Werkzeugschaftsektor, gebildet, indem der Kreissektor entlang der Mittelachse gedanklich extrudiert ist, wobei der Kreissektor entlang der Mittelachse nicht um die Mittelachse rotiert.

In einer anderen Ausführungsform ist ein Werkzeugschaftsektor, ausgewählt aus dem ersten Werkzeugschaftsektor, dem zweiten Werkzeugschaftsektor und dem dritten Werkzeugschaftsektor, gebildet, indem der Kreissektor entlang der Mittelachse gedanklich extrudiert ist, wobei der Kreissektor entlang der Mittelachse um die Mittelachse - insbesondere um einen vorbestimmten Winkel pro Längeneinheit auf der Mittelachse - rotiert. Insbesondere umgreift der Werkzeugschaftsektor die Mittelachse schraubenlinienförmig.

Insbesondere umgreift ein Werkzeugschaftsektor, ausgewählt aus dem ersten Werkzeugschaftsektor, dem zweiten Werkzeugschaftsektor und dem dritten Werkzeugschaftsektor, die Mittelachse schraubenlinienförmig.

Unter einer Werkzeugstirn - auch als Stirnseite bezeichnet - wird insbesondere eine bestimmungsgemäß einem zu bearbeitenden Werkstück zugewandte Front eines Werkzeugkörpers des Werkzeugs verstanden. Unter einem Schaftende wird insbesondere ein bestimmungsgemäß dem zu bearbeitenden Werkstück abgewandtes Ende des Werkzeugs verstanden, welches entlang der Mittelachse der Werkzeugstirn gegenüberliegt. Das Schaftende ist in bevorzugter Ausgestaltung eingerichtet, um mit einer Werkzeugmaschine oder einem Adapter oder dergleichen verbunden zu werden. Insbesondere kann es sich bei dem Schaftende um ein Einspann-Ende oder einen Einspannschaft des Werkzeugs handeln. Unter einer "Erstreckung in Richtung zu dem Schaftende hin" ist insbesondere zu verstehen, dass sich das derart bezeichnete Element in Richtung des Schaftendes erstreckt, das Element muss dabei nicht zwingend bis an das Schaftende heranreichen, sondern kann vielmehr in einem Abstand zu dem Schaftende enden.

In einer Ausführungsform weist das Werkzeug mindestens eine Nebenschneide, insbesondere vier Nebenschneiden, auf, die an dem Wirk-Ende, insbesondere an einer Stirnseite des Werkzeugschafts, angeordnet ist. Die mindestens eine Nebenschneide kommt insbesondere in Eingriff, wenn das Werkzeug entlang der Mittelachse in das Werkstück zugestellt wird. Insbesondere wird das Werkzeug während der Zustellung entlang der Mittelachse in einer weiteren, insbesondere quer zu der Mittelachse orientierten, Richtung verlagert, sodass eine rampenförmige Zustellung in das Werkstück realisiert wird. Insbesondere folgt das Werkzeug während dessen Zustellung in das Werkstück einer kreisförmigen Bahnkurve, insbesondere einer orbitalen Bahnkurve, insbesondere einer helixförmigen Bahnkurve.

In einer Ausführungsform ist das Werkzeug, insbesondere eine Schneide, ausgewählt aus den ersten Schneiden, den zweiten Schneiden und den Schneidelementen, mit einer Schutzschicht, insbesondere einer CVD-Schutzschicht, insbesondere einer Diamantbeschichtung, insbesondere einer CVD-Diamantbeschichtung, beschichtet. Die Schutzschicht ist insbesondere mittels eines chemischen Gasphasenabscheidungsverfahrens (abgekürzt: CVD-Verfahren, Chemical Vapour Deposition) auf das Werkzeug aufgebracht. Insbesondere ist das Werkzeug mittels eines chemischen Gasphasenabscheidungsverfahrens unter Ausbildung der Schutzschicht beschichtet. Insbesondere wird eine Standzeit des Werkzeugs mittels der Schutzschicht erhöht.

Gemäß einer Weiterbildung der Erfindung ist vorgesehen, dass ein dritter Werkzeugschaftsektor des mindestens einen dritten Werkzeugschaftsektors entlang der Umfangsrichtung zwischen einem ersten Werkzeugschaftsektor des mindestens einen ersten Werkzeugschaftsektors und einem zweiten Werkzeugschaftsektor des mindestens einen zweiten Werkzeugschaftsektors, insbesondere direkt benachbart, insbesondere angrenzend, angeordnet ist. Der dritte Werkzeugschaftsektor geht unterbrechungsfrei, insbesondere ohne Spannutunterbrechung, insbesondere ohne Unterbrechung durch eine Hauptspannut, in den ersten Werkzeugschaftsektor und/oder in den zweiten Werkzeugschaftsektor, insbesondere einerseits in den ersten Werkzeugschaftsektor und andererseits in den zweiten Werkzeugschaftsektor, über. Insbesondere können durch den Verzicht auf die Hauptspannuten die Vibrationen während der Bearbeitung des Werkstücks weiter reduziert werden. Das Werkzeug liegt vorteilhaft innerhalb des sich in Eingriff befindlichen Werkzeugschaftsektors nahezu vollständig - in Umfangsrichtung gesehen - an dem Werkstück an.

Unterbrechungsfrei, insbesondere ohne Spannutunterbrechung, insbesondere ohne Unterbrechung durch eine Hauptspannut, bedeutet im Kontext der vorliegenden technischen Lehre insbesondere, dass zwischen dem dritten Werkzeugschaftsektor und einem Werkzeugschaftsektor, ausgewählt aus dem ersten Werkzeugschaftsektor und dem zweiten Werkzeugschaftsektor, abgesehen von einer Schneidenspannut, keine weitere Hauptspannut angeordnet ist. Eine Schneidenspannut ist insbesondere eine einer Schneide, ausgewählt aus den ersten Schneiden und den zweiten Schneiden, zugeordnete Spannut. Insbesondere jene Spannut, die von einer Spanfläche der jeweiligen Schneide oder von einer Rückfläche der jeweiligen Schneide begrenzt ist, wobei die Rückfläche jene Fläche ist, die an eine Freifläche der jeweiligen Schneide angrenzt und auf einer gegenüberliegenden Seite der Spanfläche an der jeweiligen Schneide angeordnet ist. Insbesondere weist das Werkzeug als Nuten nur die den ersten Schneiden und den zweiten Schneiden zugeordnete Schneidenspannuten auf.

Es ist jedoch möglich, dass die Nebenschneide - sofern das Werkzeug eine solche aufweist - eine weitere, eigene Nebenschneidenspannut aufweist, die jedoch derart angeordnet und ausgebildet ist, dass die Nebenschneidenspannut der eben beschriebenen Unterbrechungsfreiheit nicht entgegensteht, insbesondere nicht zu einer Unterbrechungsunfreiheit führt. Insbesondere ist die Nebenschneidenspannut nicht zwischen dem dritten Werkzeugschaftsektor und einem Werkzeugschaftsektor, ausgewählt aus dem ersten Werkzeugschaftsektor und dem zweiten Werkzeugschaftsektor, angeordnet.

Gemäß einer Weiterbildung der Erfindung ist vorgesehen, dass der erste Werkzeugschaftsektor nur die ersten Schneiden aufweist. Insbesondere ist der erste Werkzeugschaftsektor frei von den zweiten Schneiden und frei von den Schneidelementen. Insbesondere weist der erste Werkzeugschaftsektor keine zweiten Schneiden und keine Schneidelemente auf. Alternativ oder zusätzlich ist vorgesehen, dass der zweite Werkzeugschaftsektor nur die zweiten Schneiden aufweist. Insbesondere ist der zweite Werkzeugschaftsektor frei von den ersten Schneiden und frei von den Schneidelementen. Insbesondere weist der zweite Werkzeugschaftsektor keine ersten Schneiden und keine Schneidelemente auf.

Gemäß einer Weiterbildung der Erfindung ist vorgesehen, dass die ersten Schneiden parallel zueinander angeordnet sind. Alternativ oder zusätzlich ist vorgesehen, dass die zweiten Schneiden parallel zueinander angeordnet sind. Vorteilhaft ist damit eine Eingriffscharakteristik des Werkzeugs entlang des Werkzeugschafts konstant.

Gemäß einer Weiterbildung der Erfindung ist vorgesehen, dass die erste Steigung und die zweite Steigung gegensinnig ausgebildet sind.

Gemäß einer Weiterbildung der Erfindung ist vorgesehen, dass die erste Steigung und die zweite Steigung betragsmäßig gleich sind, wobei sie insbesondere jedoch verschiedene Vorzeichen aufweisen. Vorteilhaft wird dadurch ein besonders vibrationsarmes Werkzeug geschaffen.

Gemäß einer Weiterbildung der Erfindung ist vorgesehen, dass das Werkzeug mindestens zwei erste Werkzeugschaftsektoren als den mindestens einen ersten Werkzeugschaftsektor aufweist, die entlang der Umfangsrichtung - insbesondere durch zumindest einen dritten und einen zweiten Werkzeugschaftsektor - beabstandet voneinander angeordnet sind. Alternativ oder zusätzlich ist vorgesehen, dass das Werkzeug mindestens zwei zweite Werkzeugschaftsektoren als den mindestens einen zweiten Werkzeugschaftsektor aufweist, die entlang der Umfangsrichtung - insbesondere durch zumindest einen dritten und einen ersten Werkzeugschaftsektor - beabstandet voneinander angeordnet sind. Alternativ oder zusätzlich ist vorgesehen, dass das Werkzeug mindestens zwei dritte Werkzeugschaftsektoren als den mindestens einen dritten Werkzeugschaftsektor aufweist, die entlang der Umfangsrichtung - insbesondere durch einen ersten oder einen zweiten Werkzeugschaftsektor - beabstandet voneinander angeordnet sind. Insbesondere wird dadurch ein Zeitspanvolumen des Werkzeugs erhöht.

Gemäß einer Weiterbildung der Erfindung ist vorgesehen, dass zwei erste Werkzeugschaftsektoren der mindestens zwei ersten Werkzeugschaftsektoren diametral gegenüberliegend angeordnet sind. Alternativ oder zusätzlich ist vorgesehen, dass zwei zweite Werkzeugschaftsektoren der mindestens zwei zweiten Werkzeugschaftsektoren diametral gegenüberliegend angeordnet sind. Alternativ oder zusätzlich ist vorgesehen, dass zwei dritte Werkzeugschaftsektoren der mindestens zwei dritten Werkzeugschaftsektoren diametral gegenüberliegend angeordnet sind.

In einer Ausführungsform ist das Werkzeug n-zählig rotationssymmetrisch um die Mittelachse, insbesondere achsensymmetrisch zu der Mittelachse ausgebildet.

Gemäß einer Weiterbildung der Erfindung ist vorgesehen, dass mindestens ein Schneidelement der Mehrzahl von Schneidelementen pyramidal oder pyramidenstumpfförmig ausgebildet ist.

Insbesondere weist das mindestens eine Schneidelement zumindest eine Spanfläche, insbesondere zwei Spanflächen, eine erste Spanfläche und eine zweite Spanfläche, auf. Insbesondere ist die erste Spanfläche und/oder die zweite Spanfläche konkav ausgebildet. Insbesondere ist die erste Spanfläche dem ersten Schneidenabschnitt zugeordnet. Insbesondere ist die zweite Spanfläche dem zweiten Schneidenabschnitt zugeordnet.

Insbesondere weist das mindestens eine Schneidelement zumindest eine Rückfläche, insbesondere zwei Rückflächen, eine erste Rückfläche und eine zweite Rückfläche, auf. Insbesondere ist die erste Rückfläche und/oder die zweite Rückfläche konvex ausgebildet. Insbesondere ist die Rückfläche eine Fläche, die an eine Freifläche des zugeordneten Schneidelements angrenzt und auf einer gegenüberliegenden Seite der Spanfläche an dem jeweiligen Schneidelement angeordnet ist. Insbesondere ist die erste Rückfläche eine Fläche, die an eine Freifläche des zugeordneten Schneidelements angrenzt und auf einer gegenüberliegenden Seite der ersten Spanfläche an dem Schneidelement angeordnet ist. Insbesondere ist die zweite Rückfläche eine Fläche, die an die Freifläche des zugeordneten Schneidelements angrenzt und auf einer gegenüberliegenden Seite der zweiten Spanfläche an dem Schneidelement angeordnet ist.

Insbesondere weist ein einzelnes Schneidelement die erste Spanfläche, die zweite Spanfläche, die erste Rückfläche, die zweite Rückfläche und die Freifläche auf.

Gemäß einer Weiterbildung der Erfindung ist vorgesehen, dass eine erste Anzahl der ersten Werkzeugschaftsektoren entlang der Umfangsrichtung gerade ist. Alternativ oder zusätzlich ist vorgesehen, dass eine zweite Anzahl der zweiten Werkzeugschaftsektoren entlang der Umfangsrichtung gerade ist. Alternativ oder zusätzlich ist vorgesehen, dass eine dritte Anzahl der dritten Werkzeugschaftsektoren entlang der Umfangsrichtung gerade ist.

Gemäß einer Weiterbildung der Erfindung ist vorgesehen, dass entlang der Umfangsrichtung die dritte Anzahl der Summe aus der ersten Anzahl und der zweiten Anzahl entspricht.

Gemäß einer Weiterbildung der Erfindung ist vorgesehen, dass das Werkzeug genau zwei erste Werkzeugschaftsektoren als den mindestens einen ersten Werkzeugschaftsektor aufweist. Das Werkzeug weist genau zwei zweite Werkzeugschaftsektoren als den mindestens einen zweiten Werkzeugschaftsektor auf. Das Werkzeug weist genau vier dritte Werkzeugschaftsektoren als den mindestens einen dritten Werkzeugschaftsektor auf.

Die Erfindung wird im Folgenden anhand der Zeichnung näher erläutert. Dabei zeigen:
- Fig. 1: eine schematische Darstellung eines Ausführungsbeispiels eines Werkzeugs zur spanabhebenden Bearbeitung eines Werkstücks in einer ersten Ansicht,
- Fig. 2: eine schematische Darstellung des Werkzeugs gemäß Figur 1 in einer zweiten Ansicht,
- Fig. 3: eine schematische Darstellung des Werkzeugs gemäß Figur 1 in einer dritten Ansicht, und
- Fig. 4: eine schematische Darstellung eines Schneidelements des Werkzeugs gemäß Figur 3.

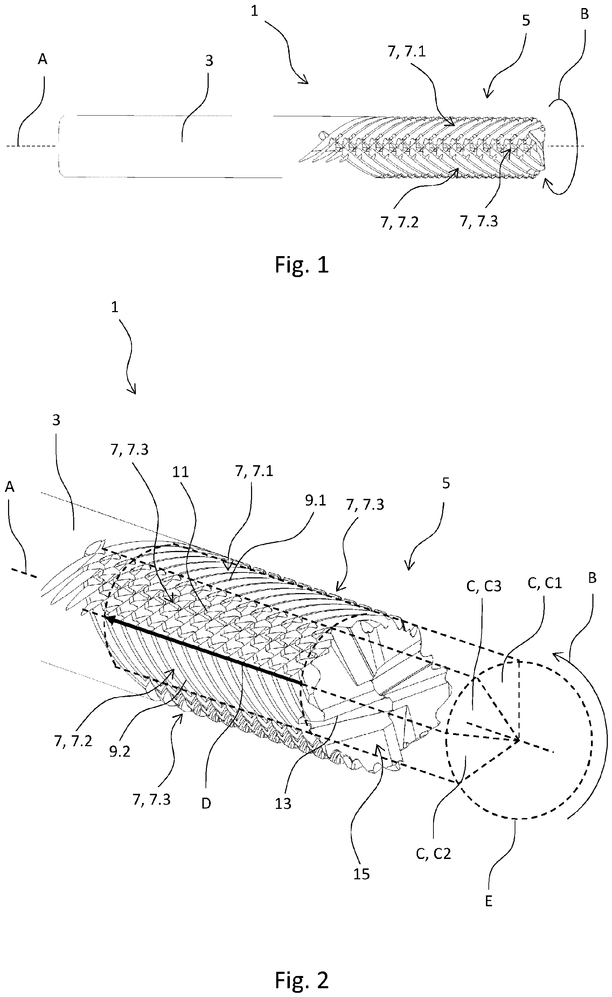

**Figur 1** zeigt eine schematische Darstellung eines Ausführungsbeispiels eines Werkzeugs 1, insbesondere Fräswerkzeugs, zur spanabhebenden Bearbeitung eines nicht dargestellten Werkstücks, wobei das Werkstück insbesondere einen Faserverbundwerkstoff aufweist oder aus einem Faserverbundwerkstoff gebildet ist. Das Werkzeug 1 ist in einer ersten - Seiten- - Ansicht dargestellt.

Das Werkzeug 1 weist einen Werkzeugschaft 3 mit einer - durch eine strichlierte Linie A dargestellten - Mittelachse und ein Wirk-Ende 5 auf. Die Mittelachse A ist von einer - mittels eines Pfeils B dargestellten - Umfangsrichtung umgriffen. Das Werkzeug 1 weist mindestens einen ersten Werkzeugschaftsektor 7.1, mindestens eine zweiten Werkzeugschaftsektor 7.2 und mindestens einen dritten Werkzeugschaftsektor 7.3 auf.

Das Wirk-Ende 5 und die Werkzeugschaftsektoren 7 sind in Figur 2 vergrößert dargestellt.

**Figur 2** zeigt eine schematische Darstellung des Werkzeugs 1 gemäß Figur 1. Das Werkzeug 1, insbesondere das Wirk-Ende 5 und die Werkzeugschaftsektoren 7, sind in einer vergrößerten, zweiten - isometrischen - Ansicht dargestellt.

Dabei sind gleiche und funktionsgleiche Elemente in allen Figuren mit gleichen Bezugszeichen versehen, sodass insoweit jeweils auf die vorangegangene Beschreibung verwiesen wird.

Das Werkzeug 1 weist ferner den mindestens einen sich bereichsweise entlang der Umfangsrichtung B und entlang der Mittelachse A erstreckenden ersten Werkzeugschaftsektor 7.1 auf. Der mindestens eine erste Werkzeugschaftsektor 7.1 weist eine Mehrzahl von ersten Schneiden 9.1 auf, die, insbesondere ausgehend von dem Wirk-Ende 5, entlang der Mittelachse A voneinander beabstandet angeordnet sind und bereichsweise die Mittelachse A schraubenlinienförmig umgreifen. Die ersten Schneiden 9.1 weisen eine erste Steigung auf.

Das Werkzeug 1 weist ferner den mindestens einen sich bereichsweise entlang der Umfangsrichtung B und entlang der Mittelachse A erstreckenden zweiten Werkzeugschaftsektor 7.2 auf. Der mindestens eine zweite Werkzeugschaftsektor 7.2 weist eine Mehrzahl von zweiten Schneiden 9.2 auf, die, insbesondere ausgehend von dem Wirk-Ende 5, entlang der Mittelachse A voneinander beabstandet angeordnet sind und bereichsweise die Mittelachse A schraubenlinienförmig umgreifen. Die zweiten Schneiden 9.2 weisen eine von der ersten Steigung verschiedene zweite Steigung auf.

Das Werkzeug 1 weist ferner den mindestens einen sich bereichsweise entlang der Umfangsrichtung B und entlang der Mittelachse A erstreckenden dritten Werkzeugschaftsektor 7.3 auf. In dem dritten Werkzeugschaftsektor 7.3 kreuzen sich die ersten Schneiden 9.1 und die zweiten Schneiden 9.2 derart, dass, insbesondere in demselben dritten Werkzeugschaftsektor 7.3, eine Mehrzahl voneinander beabstandeter Schneidelemente 11 gebildet ist. Nur, insbesondere ausschließlich, der mindestens eine dritte Werkzeugschaftsektor 7.3 weist die Schneidelemente 11 auf. Insbesondere ist der erste Werkzeugschaftsektor 7.1 frei von den Schneidelementen 11, weist also insbesondere keine Schneidelemente 11 auf. Insbesondere ist der zweite Werkzeugschaftsektor 7.2 frei von den Schneidelementen 11, weist also insbesondere keine Schneidelemente 11 auf.

Insbesondere ist ein Werkzeugschaftsektor 7, ausgewählt aus dem ersten Werkzeugschaftsektor 7.1, dem zweiten Werkzeugschaftsektor 7.2 und dem dritten Werkzeugschaftsektor 7.3, ein Werkzeugschaftvolumen, das gebildet, insbesondere begrenzt ist, indem ein Kreissektor C entlang der Mittelachse A gedanklich bis auf eine Extrusionslänge - dargestellt durch den Pfeil D - extrudiert ist. Vorliegend sind drei Kreissektoren C, nämlich ein erster Kreissektor C1, ein zweiter Kreissektor C2 und ein dritter Kreissektor C3, dargestellt. Der erste Kreissektor C1 ist dabei dem ersten Werkzeugschaftsektor 7.1, der zweite Kreissektor C2 dem zweiten Werkzeugschaftsektor 7.2 und der dritte Kreissektor C3 dem dritten Werkzeugschaftsektor 7.3 zugeordnet. Der Kreissektor C liegt in einer senkrecht auf der Mittelachse A stehenden Ebene - dargestellt durch den Kreis E - des Werkzeugs 1.

In dem dargestellten Ausführungsbeispiel ist ein Werkzeugschaftsektor 7, ausgewählt aus dem ersten Werkzeugschaftsektor 7.1, dem zweiten Werkzeugschaftsektor 7.2 und dem dritten Werkzeugschaftsektor 7.3, gebildet, indem der Kreissektor C entlang der Mittelachse A gedanklich extrudiert ist, wobei der Kreissektor C entlang der Mittelachse A nicht um die Mittelachse A rotiert. In dieser Ausführungsform erfolgt die gedankliche Extrusion der Werkzeugschaftsektoren 7 ausgehend von dem Wirk-Ende 5 entlang der Mittelachse A.

In dem dargestellten Ausführungsbeispiel weist das Werkzeug 1 vier Nebenschneiden 13 auf - von denen nur eine mit einem Bezugszeichen versehen ist -, die an dem Wirk-Ende 5, insbesondere an einer Stirnseite 15 des Werkzeugschafts 3, angeordnet sind. Die vier Nebenschneiden 13 kommen insbesondere in Eingriff, wenn das Werkzeug 1 entlang der Mittelachse A in das Werkstück zugestellt wird.

In dem dargestellten Ausführungsbeispiel ist das Werkzeug 1, insbesondere eine Schneide, ausgewählt aus den ersten Schneiden 9.1, den zweiten Schneiden 9.2 und den Schneidelementen 11, mit einer Schutzschicht, insbesondere einer CVD-Schutzschicht, insbesondere einer Diamantbeschichtung, insbesondere einer CVD-Diamantbeschichtung, beschichtet. Die Schutzschicht ist bevorzugt mittels eines chemischen Gasphasenabscheidungsverfahrens (abgekürzt: CVD-Verfahren) auf das Werkzeug 1 aufgebracht. Insbesondere ist das Werkzeug 1 mittels eines chemischen Gasphasenabscheidungsverfahrens unter Ausbildung der Schutzschicht beschichtet.

In dem dargestellten Ausführungsbeispiel ist vorgesehen, dass ein dritter Werkzeugschaftsektor 7.3 des mindestens einen dritten Werkzeugschaftsektors 7.3 entlang der Umfangsrichtung B zwischen einem ersten Werkzeugschaftsektor 7.1 des mindestens einen ersten Werkzeugschaftsektors 7.1 und einem zweiten Werkzeugschaftsektor 7.2 des mindestens einen zweiten Werkzeugschaftsektors 7.2, insbesondere direkt benachbart, insbesondere angrenzend, angeordnet ist. Der dritte Werkzeugschaftsektor 7.3 geht unterbrechungsfrei, insbesondere ohne Spannutunterbrechung, insbesondere ohne Unterbrechung durch eine Hauptspannut, in den ersten Werkzeugschaftsektor 7.1 und in den zweiten Werkzeugschaftsektor 7.2 über.

In dem dargestellten Ausführungsbeispiel ist vorgesehen, dass der erste Werkzeugschaftsektor 7.1 nur die ersten Schneiden 9.1 aufweist. Insbesondere ist der erste Werkzeugschaftsektor 7.1 frei von den zweiten Schneiden 9.2 und frei von den Schneidelementen 11. Insbesondere weist der erste Werkzeugschaftsektor 7.1 keine zweiten Schneiden 9.2 und keine Schneidelemente 11 auf. Zusätzlich ist vorgesehen, dass der zweite Werkzeugschaftsektor 7.2 nur die zweiten Schneiden 9.2 aufweist. Insbesondere ist der zweite Werkzeugschaftsektor 7.2 frei von den ersten Schneiden 9.1 und frei von den Schneidelementen 11. Insbesondere weist der zweite Werkzeugschaftsektor 7.2 keine ersten Schneiden 9.1 und keine Schneidelemente 11 auf.

In dem dargestellten Ausführungsbeispiel ist vorgesehen, dass die ersten Schneiden 9.1 parallel zueinander angeordnet sind. Zusätzlich ist vorgesehen, dass die zweiten Schneiden 9.2 parallel zueinander angeordnet sind. In dieser Ausführungsform ist vorgesehen, dass die erste Steigung und die zweite Steigung gegensinnig ausgebildet und betragsmäßig gleich sind.

In dem dargestellten Ausführungsbeispiel ist vorgesehen, dass das Werkzeug 1 zwei erste Werkzeugschaftsektoren 7.1 aufweist, die entlang der Umfangsrichtung B beabstandet voneinander angeordnet sind, von denen einer auf einer dem Betrachter abgewandten Seite des Werkzeugs 1 angeordnet ist. Zusätzlich ist vorgesehen, dass das Werkzeug 1 zwei zweite Werkzeugschaftsektoren 7.2 aufweist, die entlang der Umfangsrichtung B beabstandet voneinander angeordnet sind, von denen einer auf der dem Betrachter abgewandten Seite des Werkzeugs 1 angeordnet ist. Zusätzlich ist vorgesehen, dass das Werkzeug 1 vier dritte Werkzeugschaftsektoren 7.3 aufweist, die entlang der Umfangsrichtung B beabstandet voneinander angeordnet sind, von denen einer auf der dem Betrachter abgewandten Seite des Werkzeugs 1 angeordnet ist.

In dem dargestellten Ausführungsbeispiel ist vorgesehen, dass die zwei ersten Werkzeugschaftsektoren 7.1 diametral einander gegenüberliegend angeordnet sind. Zusätzlich ist vorgesehen, dass die zwei zweiten Werkzeugschaftsektoren 7.2 diametral einander gegenüberliegend angeordnet sind. Zusätzlich ist vorgesehen, dass die vier dritten Werkzeugschaftsektoren 7.3 paarweise diametral gegenüberliegend angeordnet sind. In dieser Ausführungsform ist das Werkzeug 1 achsensymmetrisch zu der Mittelachse A ausgebildet.

In dem dargestellten Ausführungsbeispiel ist vorgesehen, dass eine erste Anzahl der ersten Werkzeugschaftsektoren 7.1 - hier zwei - entlang der Umfangsrichtung B gerade ist. Zusätzlich ist vorgesehen, dass eine zweite Anzahl der zweiten Werkzeugschaftsektoren 7.2 - hier zwei - entlang der Umfangsrichtung B gerade ist. Zusätzlich ist vorgesehen, dass eine dritte Anzahl der dritten Werkzeugschaftsektoren 7.3 - hier vier - entlang der Umfangsrichtung B gerade ist.

In dem dargestellten Ausführungsbeispiel ist vorgesehen, dass entlang der Umfangsrichtung B die dritte Anzahl - hier vier - der Summe aus der ersten Anzahl - hier zwei - und der zweiten Anzahl - hier zwei - entspricht.

In dem dargestellten Ausführungsbeispiel ist vorgesehen, dass das Werkzeug 1 genau zwei erste Werkzeugschaftsektoren 7.1, genau zwei zweite Werkzeugschaftsektoren 7.2 und genau vier dritte Werkzeugschaftsektoren 7.3 aufweist.

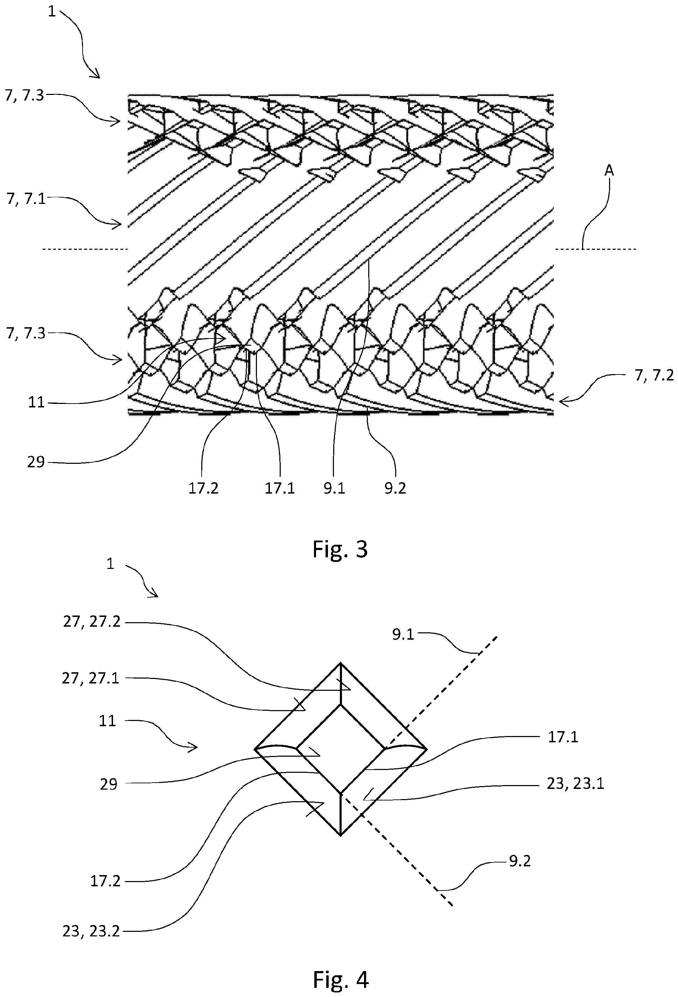

Der dritte Werkzeugschaftsektor 7.3 mit den Schneidelementen 11 und der erste Werkzeugschaftsektor 7.1 sind in Figur 3 vergrößert dargestellt.

**Figur 3** zeigt eine schematische Darstellung des Werkzeugs 1 gemäß Figur 1. Der dritte Werkzeugschaftsektor 7.3 mit den Schneidelementen 11 und der erste Werkzeugschaftsektor 7.1 sind in einer vergrößerten, dritten - Seiten- - Ansicht dargestellt. Ebenfalls teilweise zu erkennen ist der zweite Werkzeugschaftsektor 7.2

Die Schneidelemente 11 weisen, insbesondere jeweils, einen ersten Schneidenabschnitt 17.1 der sich kreuzenden ersten Schneide 9.1 und einen zweiten Schneidenabschnitt 17.2 der sich kreuzenden zweiten Schneide 9.2 auf. Die Schneidelemente 11 weisen ferner eine Freifläche 29 auf. Ein Schneidelement 11 ist in Figur 4 vergrößert dargestellt.

**Figur 4** zeigt eine schematische Darstellung des Schneidelements 11 des Werkzeugs 1. Das Schneidelement 11 ist in einer Draufsicht auf die Freifläche 29 gemäß Figur 3 dargestellt.

Ferner ist der erste Schneidenabschnitt 17.1 der sich kreuzenden ersten Schneide 9.1 und der zweite Schneidenabschnitt 17.2 der sich kreuzenden zweiten Schneide 9.2 dargestellt, wobei die erste Schneide 9.1 und die zweite Schneide 9.2 nur schemenhaft strichliert dargestellt sind.

In dem dargestellten Ausführungsbeispiel ist vorgesehen, dass mindestens ein Schneidelement 11 der Mehrzahl von Schneidelementen 11 pyramidal oder pyramidenstumpfförmig ausgebildet ist.

Insbesondere weist das mindestens eine Schneidelement 11 zumindest eine Spanfläche 23, insbesondere zwei Spanflächen 23, nämlich eine erste Spanfläche 23.1 und eine zweite Spanfläche 23.2, auf. Insbesondere ist die erste Spanfläche 23.1 und/oder die zweite Spanfläche 23.2 konkav ausgebildet. Insbesondere ist die erste Spanfläche 23.1 dem ersten Schneidenabschnitt 17.1 zugeordnet. Insbesondere ist die zweite Spanfläche 23.2 dem zweiten Schneidenabschnitt 17.2 zugeordnet.

Insbesondere weist das mindestens eine Schneidelement 11 zumindest eine Rückfläche 27, insbesondere zwei Rückflächen 27, nämlich eine erste Rückfläche 27.1 und eine zweite Rückfläche 27.2, auf. Insbesondere ist die erste Rückfläche 27.1 und/oder die zweite Rückfläche 27.2 konvex ausgebildet. Insbesondere ist die Rückfläche 27 eine Fläche, die an die Freifläche 29 des zugeordneten Schneidelements 11 angrenzt und auf einer gegenüberliegenden Seite der Spanfläche 23 an dem jeweiligen Schneidelement 11 angeordnet ist. Insbesondere ist die erste Rückfläche 27.1 eine Fläche, die an die Freifläche 29 des zugeordneten Schneidelements 11 angrenzt und auf einer gegenüberliegenden Seite der ersten Spanfläche 23.1 an dem Schneidelement 11 angeordnet ist. Insbesondere ist die zweite Rückfläche 27.2 eine Fläche, die an die Freifläche 29 des zugeordneten Schneidelements 11 angrenzt und auf einer gegenüberliegenden Seite der zweiten Spanfläche 23.2 an dem Schneidelement 11 angeordnet ist.

Insbesondere weist ein einzelnes Schneidelement 11 die erste Spanfläche 23.1, die zweite Spanfläche 23.2, die erste Rückfläche 27.1, die zweite Rückfläche 27.2 und die Freifläche 29 auf.

## Patentansprüche

1. Werkzeug (1) zur spanabhebenden Bearbeitung eines Werkstücks, aufweisend:
- einen Werkzeugschaft (3) mit einer Mittelachse, die von einer Umfangsrichtung umgriffen ist, und einem Wirk-Ende (5),
- mindestens einen sich bereichsweise entlang der Umfangsrichtung und entlang der Mittelachse erstreckenden ersten Werkzeugschaftsektor (7.1), der eine Mehrzahl von ersten Schneiden (9.1) aufweist, die entlang der Mittelachse voneinander beabstandet angeordnet sind und bereichsweise die Mittelachse schraubenlinienförmig umgreifen, wobei die ersten Schneiden (9.1) eine erste Steigung aufweisen,
- mindestens einen sich bereichsweise entlang der Umfangsrichtung und entlang der Mittelachse erstreckenden zweiten Werkzeugschaftsektor (7.2), der eine Mehrzahl von zweiten Schneiden (9.2) aufweist, die entlang der Mittelachse voneinander beabstandet angeordnet sind und bereichsweise die Mittelachse schraubenlinienförmig umgreifen, wobei die zweiten Schneiden (9.2) eine von der ersten Steigung verschiedene zweite Steigung aufweisen,
- mindestens einen sich bereichsweise entlang der Umfangsrichtung und entlang der Mittelachse erstreckenden dritten Werkzeugschaftsektor (7.3), in dem sich die ersten Schneiden (9.1) und die zweiten Schneiden (9.2) derart kreuzen, dass
- eine Mehrzahl voneinander beabstandeter Schneidelemente (11) gebildet ist, die einen ersten Schneidenabschnitt (17.1) der sich kreuzenden ersten Schneide (9.1) und einen zweiten Schneidenabschnitt (17.2) der sich kreuzenden zweiten Schneide (9.2) aufweisen, wobei
- nur der mindestens eine dritte Werkzeugschaftsektor (7.3) die Schneidelemente (11) aufweist.

2. Werkzeug (1) nach Anspruch 1, wobei
- ein dritter Werkzeugschaftsektor (7.3) des mindestens einen dritten Werkzeugschaftsektors (7.3) entlang der Umfangsrichtung zwischen einem ersten Werkzeugschaftsektor (7. 1) des mindestens einen ersten Werkzeugschaftsektors (7.1) und einem zweiten Werkzeugschaftsektor (7.2) des mindestens einen zweiten Werkzeugschaftsektors (7.2) angeordnet ist, wobei
- der dritte Werkzeugschaftsektor (7.3) unterbrechungsfrei, insbesondere ohne Spannutunterbrechung, in den ersten Werkzeugschaftsektor (7.1) und/oder in den zweiten Werkzeugschaftsektor (7.2) übergeht.

3. Werkzeug (1) nach einem der vorhergehenden Ansprüche, wobei
- der erste Werkzeugschaftsektor (7.1) nur die ersten Schneiden (9.1) aufweist, und/oder
- der zweite Werkzeugschaftsektor (7.2) nur die zweiten Schneiden (9.2) aufweist.

4. Werkzeug (1) nach einem der vorhergehenden Ansprüche, wobei
- die ersten Schneiden (9.1) parallel zueinander angeordnet sind, und/oder
- die zweiten Schneiden (9.2) parallel zueinander angeordnet sind.

5. Werkzeug (1) nach einem der vorhergehenden Ansprüche, wobei die erste Steigung und die zweite Steigung gegensinnig ausgebildet sind.

6. Werkzeug (1) nach einem der vorhergehenden Ansprüche, wobei die erste Steigung und die zweite Steigung betragsmäßig gleich sind.

7. Werkzeug (1) nach einem der vorhergehenden Ansprüche, aufweisend:
- mindestens zwei erste Werkzeugschaftsektoren (7.1) als den mindestens einen ersten Werkzeugschaftsektor (7.1), die entlang der Umfangsrichtung beabstandet voneinander angeordnet sind, und/oder
- mindestens zwei zweite Werkzeugschaftsektoren (7.2) als den mindestens einen zweiten Werkzeugschaftsektor (7.2), die entlang der Umfangsrichtung beabstandet voneinander angeordnet sind, und/oder
- mindestens zwei dritte Werkzeugschaftsektoren (7.3) als den mindestens einen dritten Werkzeugschaftsektor (7.3), die entlang der Umfangsrichtung beabstandet voneinander angeordnet sind.

8. Werkzeug (1) nach Anspruch 7, wobei
- zwei erste Werkzeugschaftsektoren (7.1) der mindestens zwei ersten Werkzeugschaftsektoren (7.1) diametral einander gegenüberliegend angeordnet sind, und/oder
- zwei zweite Werkzeugschaftsektoren (7.2) der mindestens zwei zweiten Werkzeugschaftsektoren (7.2) diametral einander gegenüberliegend angeordnet sind, und/oder
- zwei dritte Werkzeugschaftsektoren (7.3) der mindestens zwei dritten Werkzeugschaftsektoren (7.3) diametral einander gegenüberliegend angeordnet sind.

9. Werkzeug (1) nach einem der vorhergehenden Ansprüche, wobei mindestens ein Schneidelement (11) der Mehrzahl von Schneidelementen (11) pyramidal oder pyramidenstumpfförmig ausgebildet ist.

10. Werkzeug (1) nach einem der vorhergehenden Ansprüche, wobei
- eine erste Anzahl der ersten Werkzeugschaftsektoren (7.1) entlang der Umfangsrichtung gerade ist, und/oder
- eine zweite Anzahl der zweiten Werkzeugschaftsektoren (7.2) entlang der Umfangsrichtung gerade ist, und/oder
- eine dritte Anzahl der dritten Werkzeugschaftsektoren (7.3) entlang der Umfangsrichtung gerade ist.

11. Werkzeug (1) nach Anspruch 10, wobei entlang der Umfangsrichtung die dritte Anzahl der Summe aus der ersten Anzahl und der zweiten Anzahl entspricht.

12. Werkzeug (1) nach einem der vorhergehenden Ansprüche, aufweisend:
- genau zwei erste Werkzeugschaftsektoren (7.1) als den mindestens einen ersten Werkzeugschaftsektor (7.1),
- genau zwei zweite Werkzeugschaftsektoren (7.2) als den mindestens einen zweiten Werkzeugschaftsektor (7.2), und
- genau vier dritte Werkzeugschaftsektoren (7.3) als den mindestens einen dritten Werkzeugschaftsektor (7.3).
